# EUROPÄISCHE PATENTSCHRIFT

(11) **EP 2 729 322 B1**
(45) Veröffentlichungstag und Bekanntmachung des Hinweises auf die Patenterteilung: **01.02.2017**
(21) Anmeldenummer: 12721840.2
(22) Anmeldetag: 15.05.2012
(51) Int. Cl.: B60L 3/12, B60L 3/00, G07C 5/00, G01D 5/20, G06F 11/00

(54) **AUSWERTUNG VON RESOLVER-SENSORSIGNALEN**
EVALUATION OF RESOLVER SENSOR SIGNALS
ÉVALUATION DE SIGNAUX DE DÉTECTION PROVENANT D'UN RÉSOLVEUR

(30) Priorität: 04.07.2011 DE 102011078583
(43) Veröffentlichungstag der Anmeldung: 14.05.2014
(73) Patentinhaber: Robert Bosch GmbH, 70442 Stuttgart (DE)
(72) Erfinder: FU, Chengxuan, 73230 Kirchheim (DE); FEUCHTER, Wilfried, 74635 Kupferzell (DE); BISCHOF, Rene, 99891 Tabarz (DE)
(86) Internationale Anmeldenummer: PCT/EP2012/059054
(87) Internationale Veröffentlichungsnummer: WO 2013/004424

(56) Entgegenhaltungen:
- EP-A1- 2 161 831
- EP-A2- 1 153 783
- DE-A1- 10 050 383
- US-B1- 7 119 506

## Beschreibung

Die vorliegende Erfindung betrifft Antriebe für Elektro- bzw. Hybridfahrzeuge. Insbesondere betrifft die vorliegende Erfindung eine Bestimmung einer Drehbewegung einer Elektromaschine. Weiter insbesondere betrifft die vorliegende Erfindung eine Schaltung zur Auswertung von Resolver-Sensorsignalen in einem Fahrzeug, ein Steuergerät für ein Fahrzeug aufweisend eine erfindungsgemäße Schaltung sowie ein Fahrzeug, insbesondere ein Automobil aufweisend eine erfindungsgemäße Schaltung und/oder ein erfindungsgemäßes Steuergerät.

### Stand der Technik

In Elektro- bzw. Hybridfahrzeugen wird eine Antriebsleistung des Fahrzeuges, zumindest zum Teil, durch eine elektrische Maschine, somit einem Elektromotor bereitgestellt. Für eine bevorzugte Ansteuerung einer solchen Elektromaschine ist es meist hilfreich, genaue Informationen über den aktuellen Betriebszustand der elektrischen Maschine zu bestimmen.

Für eine solche Bestimmung findet meist ein sogenannter Resolver-Sensor an der elektrischen Maschine Verwendung, welcher eingesetzt wird, um Drehzahl und Winkelposition der Rotorlage einer elektrischen Maschine zu erfassen.

Drehzahl und Winkelposition sind für die Motorregelung von zentraler Bedeutung. Eine Auswertelogik findet Verwendung, um die vom Resolver-Sensor gelieferten Rohdaten derart auszuwerten, so dass die geforderten Messgrößen Drehzahl und Winkelposition an ein Steuergerät bereitgestellt werden, beispielsweise als digitale Datenwerte.

Aus der DE 100 50 383 A1 ist eine Vorrichtung für Hybridfahrzeuge bekannt, mit einem Sensor, welcher die Position und die Anzahl von Umdrehungen einer Drehwelle eines Motors erfasst und dessen Signale einer Steuervorrichtung bereitgestellt werden.

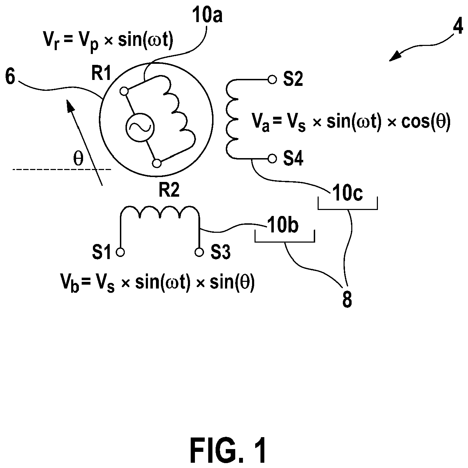

Figur 1 zeigt einen herkömmlichen Resolver-Sensor mit Rotor-Erregung.

Am Rotor 6 einer elektrischen Maschine ist Wicklung 10a angebracht. Diese Wicklung wird mit einer sinusförmigen Wechselspannung erregt. Zwei am Stator in senkrechter Ausrichtung zueinander angebrachte Wicklungen 10b, 10c erhalten eine von Wicklung 10a induzierte Spannung.

Die Amplituden der in den Wicklungen 10b, 10c induzierten Spannungen bestimmt sich hierbei durch den Winkel des Rotors bzw. der Wicklung 10a und entsprechen hierbei jeweils dem Sinus und Cosinus der Winkellage des Rotors.

Resolver-Sensor und Auswertelogik sind jedoch meist nur einfach vorhanden.

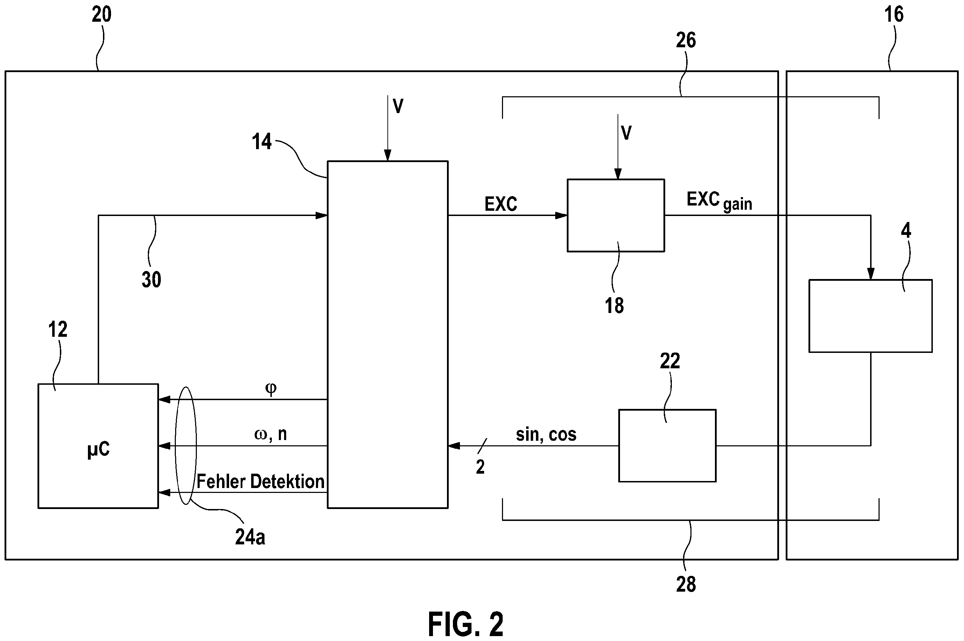

Figur 2 zeigt eine herkömmliche Auswertung eines Resolver-Sensors 4.

Steuergerät 20 weist hierbei Mikroprozessor 12 auf, welcher mittels eines Referenzsignals 30 einen Resolver-Ansteuer-/Auswerteschaltkreis 14, einen sogenannten Resolver-Chip 14 oder Resolver-Digitalkonverter-Schaltkreis 14 ansteuert. Dieser wird exemplarisch mit einer Spannung von 5V_{dc} versorgt.

Resolver-Chip 14 erzeugt hierbei exemplarisch eine Anregungssignalform, beispielsweise Sinusschwingung mit 10 kHz und ± 2,5 V_{Peak}. Diese Sinusschwingung wird über Verstärkerelement 18 in eine Erregungssignalform mit ± 10 V_{Peak} umgeformt und dem Resolver-Sensor 4 in Wicklung 10a zugeführt.

Bereich 26 stellt somit die Resolver-Ansteuerung dar. Resolver-Sensor 4 ist schematisch dargestellt am Motor einer elektrischen Maschine 16 angebracht.

Die Resolver-Sensordaten 28 werden über Filterelement 22, z.B. ein Tiefpassfilter, wiederum dem Resolver-Chip 14 als Sinus- bzw. Cosinussignale, mit beispielsweise ± 2,85 V_{Peak} zugeführt.

Der Resolver-Chip 14 selbst ist über Datenanbindung 24a mit Mikroprozessor 12 verbunden und liefert digitale Signalwerte bezüglich Rotationsgeschwindigkeit bzw. Drehzahl sowie Winkelposition des Rotors der elektrischen Maschine 16 an den Mikroprozessor 12. Weiterhin werden dem Mikroprozessor 12 über Datenanbindung 24a Fehlerinformationen zur Verfügung gestellt.

Zwar kann die Auswertelogik eine einfache Diagnose der Resolver-Sensorsignale beinhalten, die verschiedene Fehlerarten der Resolver-Signale erkennt.

Diese Fehlerinformationen beinhalten regelmäßig jedoch keine Fehler, die innerhalb des Resolver-Chips auftreten, da diese nicht ausreichend detektierbar sind, bzw. der Resolver-Chip nicht über geeignet interne Vorkehrungen verfügt, um selbst seine einwandfreie Funktion überprüfen zu können.

Somit lassen sich Fehler innerhalb der Auswertelogik selbst sowie der Datenübertragung zu einem weiterverarbeitenden Mikroprozessor eines Steuergerätes meist nicht erkennen. Zu diesen Fehlern gehören beispielsweise Registerfehler, Datenbitfehler, Adressierungsfehler der Auswertelogik, eingefrorene Daten, eine selbstständige Umkonfiguration der Auswertelogik, sowie Rechenwerkdefekte, etc.

Derartige nicht detektierbare Fehler können somit in der Übermittlung von fehlerhaften Drehzahl- und Winkelwerten resultieren, welche jedoch trotzdem von einem nachfolgenden Steuergerät als gültig erachtet werden und in einer, dann fehlerhaften, Ansteuerung des Motors resultieren können. Eine derartige fehlerbehaftete Motorregelung kann somit zu einer solch fehlerhaften Ansteuerung der elektrischen Maschine führen, so dass diese eine nicht situationsadäquate Drehbewegung ausführt, bzw. mit einem ungewünschten Drehmoment arbeitet. Die Gefährdung "ungewollte Fahrzeug-Bewegung" bzw. "ungewollte Fahrzeug-Bewegungsrichtung" kann auch durch ein Versagen des Resolver-Chips verursacht werden.

Eine derartige fehlerhafte Ansteuerung kann beispielsweise zu einem ungewollten Beschleunigen des Fahrzeuges, zur Blockierung der Antriebsachse, oder sogar zur Zerstörung der den Motor ansteuernden IGBTs führen.

### Offenbarung der Erfindung

Ein Aspekt der vorliegenden Erfindung kann somit darin gesehen werden, eine Resolver-Sensorauswertung unabhängig von einem Resolver-CHIP vorzunehmen, um so Fehler, wie sie innerhalb der Auswertelogik sowie in der nachfolgenden Datenübertragung der ausgewerteten Sensorsignale zu einem Mikroprozessor, beispielsweise eines Steuergerätes, entstehen können zu vermeiden.

Im Lichte dieses Aspekts wird eine Schaltung zur Auswertung von Resolver-Sensorsignalen in einem Fahrzeug, ein Steuergerät für ein Fahrzeug aufweisend eine erfindungsgemäße Schaltung, sowie ein Fahrzeug, insbesondere ein Automobil, aufweisend eine erfindungsgemäße Schaltung und/oder ein erfindungsgemäßes Steuergerät gemäß der unabhängigen Ansprüche bereitgestellt. Bevorzugte Ausgestaltungen ergeben sich aus den abhängigen Ansprüchen.

Ein Resolver-Chip ist regelmäßig vergleichweise teuer, benötigt in seiner Ausgestaltung Platz auf einer Leiterplatte eines Steuergerätes, benutzt regelmäßig zumindest 16 Datenleitungen für die Datenübertragung an einen Mikroprozessor und ist generell ein komplexes Bauteil, welches meist nicht ausreichend überwachbar und im Steuergerätbetrieb testbar ist. Software für die Konfiguration und Kommunikation mit einem Resolver-Chip ist vergleichsweise komplex.

Demzufolge wird vorliegend die Auswertung der Resolver-Signalsensoren direkt in einem Mikroprozessor vorgenommen. Hierdurch kann der Resolver-Chip komplett entfallen, wodurch Bauteilkosten sowie Hardware-Fertigungskosten, zum Beispiel durch kleinere Leiterplatten mit weniger Leiterbahnen, reduziert werden können.

Als Mikroprozessor kann derselbe Mikroprozessor verwendet werden, welcher auch für die Ansteuerung bzw. Bereitstellung des Referenzsignals für den Resolver-Sensor verwendet wird. Ein derartiger Mikroprozessor kann regelmäßig sehr gut abgesichert und überwacht werden. Maßnahmen wie zum Beispiel ein RAM- bzw. ROM-Test, eine Ablaufkontrolle oder auch eine Überwachung durch externe Watch-Dog-Systeme kann sicherheitsrelevante Hardware- und Software-Anteile auf einem Mikroprozessor, zum Beispiel die Anteile für die Auswertung von Resolver-Sensorsignalen, ausreichend absichern.

Im Wesentlichen erfolgt somit eine Signalverarbeitung der analogen Resolver-Sensorsignale direkt im Mikroprozessor und nicht in einer separat ausgelagerten Schaltungslogik, wie eben dem Resolver-CHIP. Individuelle Teile des Mikroprozessors können hierbei die Signalerzeugung, z.B. des Erregersignales des Resolver-Sensors, die Signalauswertung bzw. Wandelung der vom Sensor gelieferten Analogsignale sowie die Signalverarbeitung übernehmen.

Da sämtliche Module 12a, 12b, 12c Bestandteil eines Mikroprozessors 12 sind, kann die vollständige Funktionsweise der einzelnen Module unter Verwendung der herkömmlichen Sicherungsmaßnahmen des Mikroprozessors überprüft und die korrekte Funktion verifiziert werden.

Ausführungsbeispiele der Erfindung sind in den Zeichnungen dargestellt und in der nachfolgenden Beschreibung näher erläutert.

Es zeigen
Figur 1 einen Resolver-Sensor;
Figur 2 eine exemplarische Ausgestaltung einer Beschaltung von Resolver-Sensorik und Resolver-Auswertelogik;
Figuren 3a,b eine exemplarische Ausgestaltung einer Resolver-Sensorsignal-Auswertung gemäß der vorliegenden Erfindung;

### Ausführungsformen der Erfindung

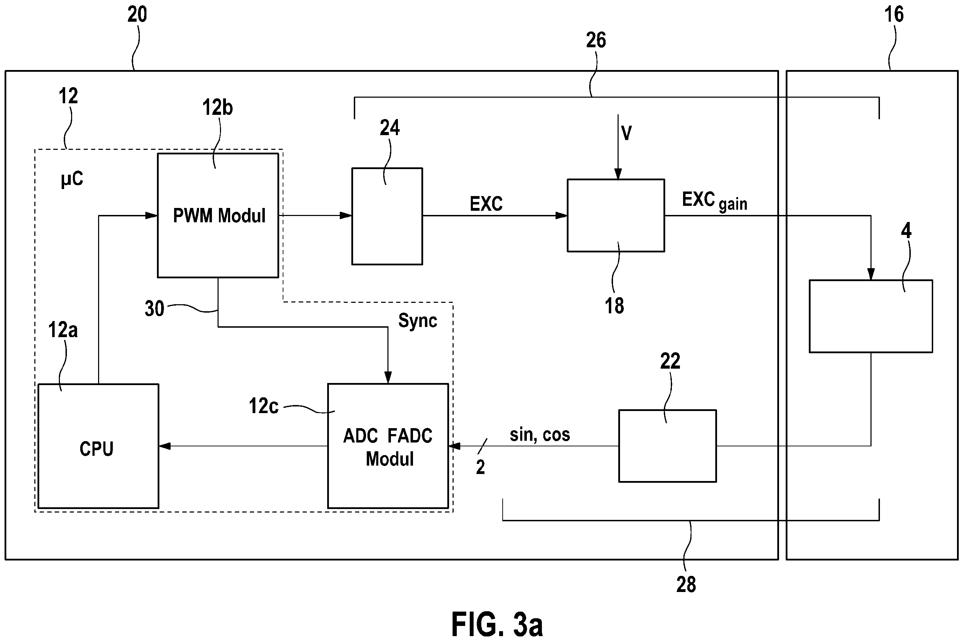

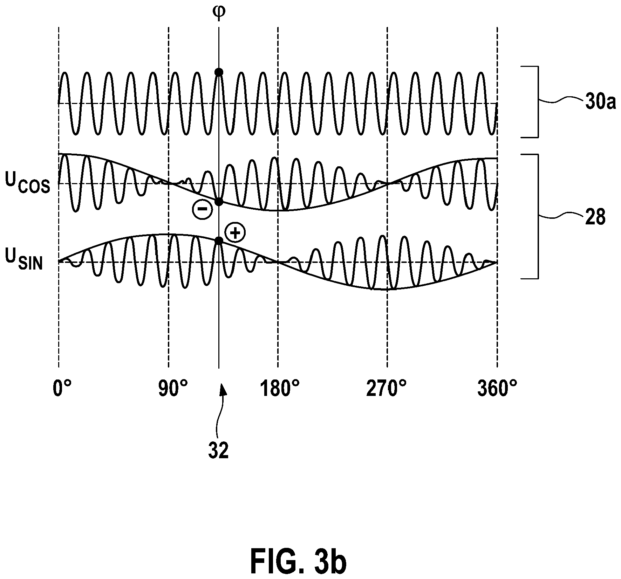

Weiter Bezug nehmend auf Figuren 3a, 3b wird eine exemplarische Ausgestaltung einer Resolver-Sensorsignal-Auswertung gemäß der vorliegenden Erfindung dargestellt.

Figur 3a weist einen zur Figur 2 vergleichbaren Aufbau des Steuergerätes 20 auf, wobei jedoch der Resolver-Chip 14 ersetzt wurde durch eine Implementation vollständig im Mikroprozessor 12. Mikroprozessor 12 weist hierzu die einzelnen Module Prozessorelement 12a, Pulsweitenmodulations-Modul 12b, sowie Analog-Digital-Konverter bzw. Fast-Analog-Digital-Konverter-Modul 12c auf.

Die Anbindungen der einzelnen Module untereinander ist im Mikroprozessor 12 durch Pfeile angedeutet.

PWM-Modul 12b wird von Prozessormodul 12a angesteuert und erzeugt zusammen mit externem Digital-Analog-Konverter 24 das Anregungssignal des Resolver-Sensors 4, z.B. ein Sinussignal mit 10kHz und ± 2.5 V_{Peak}. Das Pulsweitenmodulationsmodul 12b des Mikroprozessors 12 erzeugt Rechtecksignale, die wiederum durch einen externen Digital-Analog-Konverter 24 in das sinusförmige Erregersignal 30 umgewandelt werden. Eine besonders einfache Ausführung des PWM-Moduls 12b ist ein Tiefpassfilter.

Weiter findet Verstärkerelement 18 Verwendung, welches exemplarisch eine Spanungsversorgung mit 30V_{dc} aufweist, dabei eine Anregungsspannung von ± 10 V_{Peak} erzeugt und an den Resolver-Sensor 4 der elektrischen Maschine 16 weiterleitet. Externer Digital-Analog-Konverter-Element 24 sowie Verstärkerelement 18 ergeben somit die Resolver-Ansteuerung 26.

Resolver-Signale 28 werden unter Verwendung des Filterelementes 22, exemplarisch ein Tiefpassfilter, in Sinus- bzw. Cosinussignale mit z.B. ± 2.85 V_{Peak} umgewandelt.

Synchron zum Erregersignal wird ein Trigger-Signal bzw. ein Sync-Signal 30a erzeugt, welches den Analog-Digital-Konverter bzw. Fast-Analog-Digital-Konverter 12c, insbesondere dessen Abtastung ansteuert.

Ein Fast-ADC weist eine im Vergleich zu einem normalen ADC deutlich schnellere Umwandlungszeit auf, wodurch sich Signale mit hoher Frequenz erfassen lassen.

In Figur 3b zu sehen ist der Kurvenverlauf des sinusförmigen Erregersignals 30 sowie jeweils der Ausgang der beiden Statorwicklungen des Resolver-Sensors 4 als Resolver-Sensorsignal 28.

Durch die durch das Sync-Signal getriggerte Abtastung 32, welche exemplarisch jeweils beim positiven Peak des Referenzsignals 30 erfolgt, wird im Wesentlichen die Hüllkurve des Sinus- bzw. Cosinussignals erzeugt, wie Fig. 3b zu entnehmen ist. Somit findet eine Demodulation der Resolver-Sensordaten 28 unter Verwendung des Analog-Digital-Konverter-Moduls 12c statt. Die Resolver-Sinus/Cosinussignale 28 werden immer dann durch den Analog-Digital-Konverter erfasst, wenn das Erregersignal 30 sein Maximum erreicht, was im Wesentlichem mit dem Sync-Signal 30a korreliert.

Diese über den Analog-Digital-Konverter bzw. Fast-Analog-Digital-Konverter 12c demodulierten Signale lassen sich durch einfache mathematische Operationen derart weiterverarbeiten, um die Lage und Geschwindigkeit des Resolver-Sensors bzw. des Rotors zu ermitteln. Zusätzlich können durch die Signale eine Diagnose bzw. Plausibilitätsprüfung durchgeführt werden, um zum Beispiel Kurzschlüsse zu erkennen.

## Patentansprüche

1. Schaltung (2) zur Auswertung von Resolver-Sensorsignalen (28) in einem Fahrzeug, aufweisend
einen Resolver-Sensor (4), eingerichtet zum Aufnehmen einer Drehbewegung eines Rotors (6) einer elektrischen Maschine (16); und
ein Prozessorelement (12);
wobei der Hesolver-Sensor (4) eingerichtet ist zur Ausgabe zumindest eines sinus- bzw. cosinusförmigen amplitudenmodulierten Analogsignals (28) charakteristisch für die Drehbewegung des Rotors (6);
wobei
das Prozessorelement (12) eine Daten-Verarbeitungseinheit (CPU) (12a), eine Resolver-Sensor-Ansteuerungseinheit (PWM) (12b) und eine Resolver-Sensor-Auswerteeinheit (ADC/FADC) (12c) aufweist wobei die Resolver-Sensor-Auswerteeinheit einen Analog-Digital-Konverter aufweist ,
**dadurch gekennzeichnet, dass**
die Resolver-Sensor-Ansteuerungseinheit (12b) ein pulsweitenmoduliertes Erregersignal (30), insbesondere ein Rechtecksignal, zur Ansteuerung des Resolver-Sensors (4) sowie ein Synchronisationssignal (30a) zur Ansteuerung der Resolver-Sensor-Auswerteeinheit (12c) bereitstellt und wobei das Analogsignal (28) des Resolver-Sensors (28) mit der Resolver-Sensor-Auswerteeinheit (12c) verbunden ist,
wobei das Synchronisationssignal (30a) synchron zum Erregersignal (30) eine Abtastung (32) des Analogsignals (28) an der Resolver-Sensor-Auswerteeinheit (12c) triggert, derart, dass die Resolver-Sinus/Cosinussignale (28) immer dann durch den Analog-Digital-Konverter erfasst werden, wenn das Erregersignal (30) sein Maximum erreicht, wodurch eine Demodulation des Analogsignals (28) des Resolver-Sensors
(28) bereitgestellt wird, mittels der die Lage und Geschwindigkeit des Rotors (6) ermittelbar und eine Diagnose von Fehlern innerhalb der Resolver-Sensor-Auswerteeinheit durchführbar ist.

2. Schaltung gemäß Anspruch 1,
wobei die Schaltung ein Digital-Analog-Konverterelement (24) zur Konvertierung des pulsweitenmodulierten Signals in ein sinusförmiges analoges Erregersignal zur Ansteuerung des Resolver-Sensors (4) aufweist.

3. Schaltung gemäß Anspruch 2,
wobei das Digital-Analog-Konverterelement (24) als ein Tiefpasselement ausgebildet ist.

4. Schaltung gemäß einem der vorhergehenden Ansprüche,
wobei die Resolver-Sensor-Auswerteeinheit (12c) als ein Analog-Digital-Konverter, insbesondere als ein Fast-Analog-Digital-Konverter ausgebildet ist.

5. Schaltung gemäß einem der Ansprüche 2 bis 4,
wobei das Synchronisationssignal (30a) eine Analog-Digital-Konvertierung des momentanen Wertes zumindest eines Analogsignales (28) des Resolver-Sensors (4) durch die Resolver-Sensor-Auswerteeinheit (12c) auslöst.

6. Schaltung gemäß Anspruch 5,
wobei die Analog-Digital-Konvertierung eine Hüllkurve des zumindest einen sinus- bzw. cosinusförmigen amplitudenmodulierten Analogsignals an die Daten-Verarbeitungseinheit (12a) des Prozessorelementes (12) bereitstellt.

7. Steuergerät für eine Fahrzeug, aufweisend eine Schaltung (2) gemäß einem der vorhergehenden Ansprüche.

8. Fahrzeug, insbesondere Automobil, aufweisend eine Schaltung (2) gemäß einem der Ansprüche 1 bis 6 und/oder ein Steuergerät (20) gemäß Anspruch 7.

## Claims

1. Circuit (2) for evaluating resolver sensor signals (28) in a vehicle, having
a resolver sensor (4) which is designed to pick up a rotary movement of a rotor (6) of an electrical machine (16); and
a processor element (12);
wherein the resolver sensor (4) is designed to output at least one sinusoidal or cosinusoidal amplitude-modulated analog signal (28) which is characteristic of the rotary movement of the rotor (6);
wherein
the processor element (12) has a data processing unit (CPU) (12a), a resolver sensor actuation unit (PWM) (12b) and a resolver sensor evaluation unit (ADC/FADC) (12c), wherein the resolver sensor evaluation unit has an analog/digital converter,
**characterized in that**
the resolver sensor actuation unit (12b) supplies a pulse-width-modulated exciter signal (30), in particular a square-wave signal, for actuating the resolver sensor (4), and also a synchronization signal (30a) for actuating the resolver sensor evaluation unit (12c), and wherein the analog signal (28) of the resolver sensor (28) is connected to the resolver sensor evaluation unit (12c),
wherein the synchronization signal (30a) triggers sampling (32) of the analog signal (28) at the resolver sensor evaluation unit (12c) in synchronism with the exciter signal (30) in such a way that the resolver sine/cosine signals (28) are always detected by the analog/digital converter when the exciter signal (30) reaches its maximum, as a result of which demodulation of the analog signal (28) of the resolver sensor (28) is provided, it being possible for the position and speed of the rotor (6) to be determined and for a diagnosis of faults to be carried out within the resolver sensor evaluation unit by means of the said demodulation.

2. Circuit according to Claim 1,
wherein the circuit has a digital/analog converter element (24) for converting the pulse-width-modulated signal into a sinusoidal analog exciter signal for actuating the resolver sensor (4).

3. Circuit according to Claim 2,
wherein the digital/analog converter element (24) is in the form of a low-pass element.

4. Circuit according to one of the preceding claims,
wherein the resolver sensor evaluation unit (12c) is in the form of an analog/digital converter, in particular in the form of a fast analog/digital converter.

5. Circuit according to one of Claims 2 to 4,
wherein the synchronization signal (30a) triggers analog/digital conversion of the current value of at least one analog signal (28) of the resolver sensor (4) by the resolver sensor evaluation unit (12c).

6. Circuit according to Claim 5,
wherein the analog/digital conversion supplies an envelope of the at least one sinusoidal or cosinusoidal amplitude-modulated analog signal to the data processing unit (12a) of the processor element (12).

7. Controller for a vehicle, having a circuit (2) according to one of the preceding claims.

8. Vehicle, in particular automobile, having a circuit (2) according to one of Claims 1 to 6 and/or a controller (20) according to Claim 7.

## Revendications

1. Circuit (2) destiné à évaluer des signaux de capteur résolveur (28) dans un véhicule, comportant un capteur résolveur (4) conçu pour enregistrer un mouvement de rotation d'un rotor (6) d'une machine électrique (16) ; et
un élément processeur (12) ;
dans lequel le capteur résolveur (4) est conçu pour délivrer au moins un signal analogique (28) de forme sinusoïdale ou cosinusoïdale modulé en amplitude caractéristique du mouvement de rotation du rotor (6) ; dans lequel l'élément processeur (12) comprend une unité de traitement de données (CPU) (12a), une unité de commande de capteur résolveur (PWM) (12b) et une unité d'évaluation de capteur résolveur (ADC/FADC) (12c), dans lequel l'unité d'évaluation de capteur résolveur comprend un convertisseur analogique-numérique,
**caractérisé en ce que** l'unité de commande de capteur résolveur (12b) fournit un signal d'excitation (30) modulé en largeur d'impulsion, notamment un signal rectangulaire, pour attaquer le capteur résolveur (4), ainsi qu'un signal de synchronisation (30a) destiné à attaquer l'unité d'évaluation de capteur résolveur (12c) et dans lequel le signal analogique (28) du capteur résolveur (28) est appliqué à l'unité d'évaluation de capteur résolveur (12c),
dans lequel le signal de synchronisation (30a) déclenche un échantillonnage (32) du signal analogique (28) au niveau de l'unité d'évaluation de capteur résolveur (12c) en synchronisme avec le signal d'excitation (30) de manière à ce que les signaux sinusoïdaux/cosinusoïdaux de résolveur (28) soient détectés par le convertisseur analogique-numérique chaque fois que le signal d'excitation (30) atteint son maximum, cela permettant de réaliser une démodulation du signal analogique (28) du capteur résolveur (28), au moyen de laquelle la position et la vitesse du rotor (6) peuvent être déterminées, et un diagnostic concernant les erreurs se produisant au sein de l'unité d'évaluation de capteur résolveur peut être effectué.

2. Circuit selon la revendication 1,
dans lequel le circuit comprend un élément convertisseur numérique-analogique (24) destiné à convertir le signal modulé en largeur d'impulsion en un signal d'excitation analogique sinusoïdal destiné à attaquer le capteur résolveur (4).

3. Circuit selon la revendication 2,
dans lequel l'élément convertisseur numérique-analogique (24) est réalisé sous la forme d'un élément passe-bas.

4. Circuit selon l'une quelconque des revendications précédentes,
dans lequel l'unité d'évaluation de capteur résolveur (12c) est réalisée sous la forme d'un convertisseur analogique-numérique, notamment sous la forme d'un convertisseur analogique-numérique rapide.

5. Circuit selon l'une quelconque des revendications 2 à 4,
dans lequel le signal de synchronisation (30a) déclenche une conversion analogique-numérique de la valeur instantanée d'au moins un signal analogique (28) du capteur résolveur (4) par l'intermédiaire de l'unité d'évaluation de capteur résolveur (12c).

6. Circuit selon la revendication 5,
dans lequel la conversion analogique-numérique fournit une courbe d'enveloppe de l'au moins un signal analogique sinusoïdal ou cosinusoïdal modulé en amplitude à l'unité de traitement de données (12a) de l'élément processeur (12).

7. Appareil de commande destiné à un véhicule, comprenant un circuit (2) selon l'une quelconque des revendications précédentes.

8. Véhicule, notamment automobile, comprenant un circuit (2) selon l'une quelconque des revendications 1 à 6 et/ou un appareil de commande (20) selon la revendication 7.
